# EUROPEAN PATENT APPLICATION

(11) **EP 4 769 593 A1**
(43) Date of publication of application: **01.07.2026**
(21) Application number: 25223388.7
(22) Date of filing: 15.12.2025
(51) Int. Cl.: H01M 10/04, H01M 10/48, G06K 19/06

(54) **CELL TRACKING SYSTEM AND CELL TRACKING METHOD**

(30) Priority: 24.12.2024 KR 20240196338; 21.04.2025 KR 20250051591
(71) Applicant: LG Energy Solution, Ltd., Seoul 07335 (KR)
(72) Inventor: LEE, Choongsung, 07335 Seoul (KR); KIM, Min Su, 07335 Seoul (KR); KIM, Seungpil, 07335 Seoul (KR); KIM, Junbeom, 07335 Seoul (KR); LEE, Sung Gyu, 07335 Seoul (KR); CHOI, Seongmin, 07335 Seoul (KR)
(74) Representative: BCKIP Part mbB

(57) **Abstract**

A cell tracking method executed by a cell tracking system including a sensor subsystem (110,130) and a signal processing subsystem, the method comprising:
detecting, by the sensor subsystem (110), a semifinished cell (306) on a process line (300);
generating, by the signal processing subsystem, a virtual identification, ID, for the detected semifinished cell (306) upon detection of the semifinished cell (306);
acquiring a cell ID of the semifinished cell (306) by detecting, by the sensor subsystem (130), a code object formed on the semifinished cell (306); and
matching, by means of the signal processing subsystem, the virtual ID and the cell ID.

## Description

This application claims the benefit of Korean Patent Application No. 10-2024-0196338, filed on December 24, 2024 and Korean Patent Application No. 10-2025-0051591, filed on April 21, 2025 in the Korean Intellectual Property Office.

### TECHNICAL FIELD OF THE INVENTION

The present invention relates to a system for tracking a cell and a method of tracking a cell.

### BACKGROUND

Recently, the research and development of a secondary battery is actively conducted. A secondary battery is a rechargeable and dischargeable battery, and may be any of a conventional nickel-cadmium (Ni/Cd) battery, nickel-metal hydride battery, and the like, and an up-to-date lithium-ion battery. Among secondary batteries, the lithium-ion battery has a higher energy density compared to the conventional Ni/Cd battery, Ni/MH battery, and the like. In addition, the lithium-ion battery may be manufactured to have a small size and a light weight and, thus, it may be used as the power source of a mobile device. As the range of the use thereof expands to the power source of an electric vehicle recently, the lithium-ion battery is spotlighted as a next generation energy storage medium.

The secondary battery is manufactured through an electrode process, an assembling process, and an activation process. In order to improve the yield and reliability of a secondary battery manufacture process, securing the quality of the tracking in a manufacture process is important. Accordingly, various pieces of research for securing the quality of the tracking in the secondary battery manufacture process are conducted.

### SUMMARY OF THE INVENTION

It is an object of the present invention, to provide a cell tracking system and method by which a semifinished product can be efficiently tracked.

This object is achieved by a cell tracking method in accordance with claim 1 and a cell tracking system in accordance with claim 17.

It is one of the ideas of the present invention to match a virtual ID and an actual ID, i.e., the cell ID, of a semifinished cell. In particular, a virtual ID which is generated upon detecting a semifinished cell, e.g., on a process line, may be matched with a cell ID which is acquired by detecting a code object physically marked on the semifinished cell.

According to the present invention, there is provided a cell tracking method that may include one or more of the following steps: detecting a semifinished cell on a process line, generating a virtual identification (ID) for the semifinished cell based on or upon detection of the semifinished cell, acquiring a cell ID of the semifinished cell by detecting a code object formed on the semifinished cell, and matching the virtual ID and the cell ID.

The cell tracking method may be carried out by a cell tracking system which includes a sensor subsystem and a signal processing subsystem. The sensor subsystem may include various sensors configured to detect the semifinished cell on the process line and to detect the code object marked on the semifinished cell. The signal processing subsystem may include at least one processor, such as a CPU, a microprocessor, or the like, and a non-volatile storage medium readable by the processor. The signal processing subsystem may also include analogue signal processing circuitry. For example, a trigger board may be part of the signal processing subsystem and may be realized as an analogue circuitry or as digital logic device such as an FPGA, a microcontroller or the like.

According to some embodiments, the semifinished cell may be detected on the process line by means of the sensor subsystem, e.g., by a cell detection sensor.

According to some embodiments, the virtual ID for the semifinished cell may be generated by the signal processing subsystem, e.g., by a controller, upon detection of the semifinished cell. Generally, the sensor subsystem may issue a signal indicating that a respective cell has been detected, and the signal processing subsystem may generate a virtual ID in response to or upon receiving such a signal.

According to some embodiments, the virtual ID may be any kind of unique digital identifier that represents the respective semifinished cell. Thus, the virtual ID codes information that allows identifying the respective semifinished cell. Optionally, the virtual ID may include plural elements, that is, in a sequence of digits, specific digits or sub-sequences of digits may encode specific information. For example, the virtual ID may be composed of a prefix, one or more center code, and a hash, each coding specific information such as production line, type of semifinished cell, time stamp, etc. Alternatively, the virtual ID may be a randomly generated code.

According to some embodiments, the cell ID of the semifinished cell may be acquired by detecting the code object formed on the semifinished cell by the sensor subsystem, e.g., by a reading device.

According to some embodiments, matching the virtual ID and the cell ID may be carried out by the signal processing subsystem, e.g., by the controller. For example, the controller or, generally, the signal processing subsystem may assign the cell ID read from the code object on the semifinished cell to the virtual ID generated for said semifinished cell and, preferably, store the virtual ID and the cell ID in association with each other, e.g., temporarily or permanently, e.g., in a database or internally in the storage medium of the signal processing subsystem.

According to some embodiments, the cell tracking method may further include generating a first trigger signal and a second trigger signal, e.g., by means of a trigger board of the signal processing subsystem, based on or upon detection of the semifinished cell. For example, the trigger board may generate the first and second trigger signal in response to receiving a cell detection signal from the cell detection sensor. Further, the trigger board may transmit the first trigger signal to a controller of the signal processing subsystem. Furthermore, the trigger board may transmit the second trigger signal to a reading device of the sensor subsystem.

According to some embodiments, generating the virtual ID may include generating the virtual ID, e.g., by means of the controller of the signal processing subsystem based on the first trigger signal. For example, the controller may generate the virtual ID upon receiving the first trigger signal from the trigger board.

According to some embodiments, acquiring the cell ID may include detecting the code object formed on the semifinished cell based on the second trigger signal. That is, the reading device may detect the code object formed on the semifinished cell upon receiving the second trigger signal, e.g., by optically reading an optically readable code object, or by performing a AIDC (Automatic Identification and Data Capture) reading process, such as reading an RFID tag, a BLE beacon, or the like. Generally, detecting the code object may include reading a machine readable object.

Generating the second trigger signal may include generating the second trigger signal after a designated time elapses from a time point at which the first trigger signal is generated. For example, the trigger board may issue the second trigger signal a predefined time after issuance of the first trigger signal. The predefined time is set such that the semifinished cell can travel along the process line to a position where the sensor subsystem, e.g., the reading device, can detect the code object.

According to some embodiments, the cell tracking method may further include generating a first trigger signal based on, i.e., upon the detection of the semifinished cell, detecting a target semifinished cell on the process line, and generating a second trigger signal based on the detection of the target semifinished cell, the generating of the virtual ID may include generating the virtual ID based on the first trigger signal, and the acquiring of the cell ID may include detecting the code object formed on the semifinished cell based on the second trigger signal. For example, a trigger board of the signal processing subsystem may generate a first trigger signal upon the detection of the semifinished cell, as described above. Said first trigger signal may be transmitted to the controller. The cell detection sensor of the sensor subsystem may detect the target semifinished cell on the process line. Optionally, the cell detection sensor may generate a second cell detection signal when it detects the target semifinished cell. The trigger board may generate a second trigger signal upon the detection of the target semifinished cell. For example, the trigger board may generate the second trigger signal in response to receiving the second cell detection signal. The second trigger signal may be transmitted to the sensor subsystem, particularly to the reading device. The controller may generate the virtual ID upon receiving the first trigger signal, and the reading device may detect the code object formed on the semifinished cell upon receiving the second trigger signal. Detecting the code object may be executed as described above.

The semifinished cell and the target semifinished cell may be spaced apart by a designated or predefined distance on the process line, and the second trigger signal may be generated after the first trigger signal is generated.

According to some embodiments, detecting the semifinished cell may include detecting the semifinished cell which reaches a first position on the process line, the acquiring of the cell ID may include detecting the code object formed on the semifinished cell which reaches a second position on the process line, and the designated distance may be a distance between the first position and the second position. For example, the cell detection sensor may detect the semifinished cell when the semifinished cell reaches the first position on the process line, and the reading device may detect the code object formed on the semifinished cell when the semifinished cell reaches the second position on the process line. The second position is downstream of the first position on the process line in the process direction, i.e., a direction in which the semifinished cell is moved on the process line.

According to some embodiments, the first trigger signal and the second trigger signal may include an identification signal for identifying the semifinished cell among a designated number of semifinished cells on the process line. The trigger signal may include one identification signal for each semifinished cell of plural semifinished cells detected by the detection sensor. The respective identification signal may be a unique signal, so that the signal can be assigned to detection of a specific individual semifinished cell. For example, the identification signal may include a unique time stamp or a unique identification code.

For example, the identification signal may be a binary coded decimal (BCD) signal.

According to some embodiments, the cell tracking method may further include generating a third trigger signal including the identification signal based on acquisition of the cell ID, and matching of the virtual ID and the cell ID may include matching the virtual ID and the cell ID based on the third trigger signal. According to an embodiment, the reading device may generate the third trigger signal upon acquisition of the cell ID. The third trigger signal may be transmitted to the controller or, generally, to the signal processing subsystem, along with the cell ID. The signal processing subsystem, i.e., the controller, may match the matching the virtual ID and the cell ID based on the third trigger signal. For example, the signal processing subsystem may compare the identification signal in the first trigger signal and the identification signal in the third trigger signal and match the virtual ID and the cell ID if the identification signals in the first trigger signal and third trigger signal fulfil predefined requirements, e.g., when they are identical.

The detecting of the semifinished cell may include detecting the semifinished cell on a first process line corresponding to a first sub-process included in a secondary battery manufacture process, generating of the virtual ID may include generating a first virtual ID of the semifinished cell in the first sub-process, acquiring of the cell ID may include acquiring the cell ID of the semifinished cell by detecting the code object in the first sub-process, matching of the virtual ID and the cell ID may include matching the first virtual ID and the cell ID, and the cell tracking method may further include marking the code object on the semifinished cell in the first sub-process. The semifinished cell may be subjected to the first sub-process on the first process line. The code object may be marked on the semifinished cell, for example, when it enters the first process line. Marking the code object to the semifinished cell may be carried out by means of a marking device, e.g., by printing, laser engraving, tagging or similar.

The cell tracking method may further include detecting the semifinished cell on a second process line corresponding to a second sub-process included in the secondary battery manufacture process, generating a second virtual ID of the semifinished cell in the second sub-process based on detection of the semifinished cell on the second sub-process, acquiring, in the second sub-process, the cell ID of the semifinished cell by detecting a code object formed on the semifinished cell, and matching the second virtual ID and the cell ID. The second sub-process may be performed after the first sub-process is performed. The semifinished cell may be subjected to the second sub-process on the second process line. Generating the second virtual ID, acquiring the cell ID on the second process line, and matching the cell ID and the second virtual ID may be done in the same way as described above. Optionally, one and the same cell tracking system may be provided for the first and the second process line. Alternatively, each process line may be provided with an individual cell tracking system. In this case, the individual cell tracking systems may communicate with each other, e.g., by transmitting the virtual IDs matched with the cell IDs to the respective other cell tracking system.

According to some embodiments, the first sub-process may be a notching process, and the second sub-process may be a lamination process.

According to some embodiments, the cell tracking method may further include acquiring, by detecting a plurality of code objects formed on a plurality of unit cells included in the semifinished cell, a plurality of unit cell IDs individually corresponding to the plurality of unit cells, and matching the plurality of unit cell IDs and the virtual ID. The plurality of code objects on the unit cells may be detected by the sensor subsystem, e.g., by the reading device. Matching of the unit cell IDs and the virtual ID may be done by the signal processing subsystem, e.g., the controller. A unit cell, in the broadest sense, may be defined as a cell composed of an electrode (for example, a positive electrode and/or a negative electrode) with at least one polarity and a separator. For example, the unit cell may be configured as a mono cell in which a positive electrode and a negative electrode are respectively positioned on the outermost sides, a bi-cell in which electrodes of the same polarity are positioned on the outermost sides, or a half cell in which a positive electrode or a negative electrode is positioned between separators of on the outermost sides. When entering a respective process line, the code objects on the unit cells may be detected, e.g., by a reading device, and these unit cell IDs. In the process line, then, a semifinished product may be produced from the semifinished cell, e.g., an electrode assembly. This semifinished cell including the unit cell, then, may be detected in the process line, and a virtual ID may be generated for this semifinished cell, and the virtual ID may be matched with or associated with the unit cell IDs.

The cell tracking method may further include detecting the plurality of unit cells on the process line, generating, based on detection of the plurality of unit cells, a plurality of virtual IDs individually corresponding to the plurality of unit cells on a one-to-one basis, and matching the plurality of virtual IDs and the plurality of unit cell IDs on a one-to-one basis. For example, at the time of entering the process line, in addition to detecting the unit cell IDs, the unit cells may be detected by the sensor subsystem and the signal processing subsystem may generate virtual IDs for the unit cells and associate the unit cell IDs and the virtual IDs of the unit cells.

The semifinished cell may be a stack-type electrode assembly formed by stacking the plurality of unit cells. Alternatively, the semifinished cell may be a folding-type electrode assembly formed by folding the plurality of unit cells.

According to some embodiments, the cell tracking method may further include marking a second code object on a second semifinished cell including the semifinished cell, acquiring a second cell ID of the second semifinished cell by detecting the second code object formed on the second finished cell, and matching the cell ID and the second cell ID. The second semifinished cell may also be referred to as a semifinished cell product. For example, the semifinished cell may be a unit cell, and the semifinished cell product may be an electrode assembly including the unit cell. Alternatively, the semifinished cell product may be a battery cell comprising the electrode assembly packed in a cell case. Hence, after manufacturing the semifinished cell product in the production line, a second code object may be marked on the semifinished cell product, and the second code object may be detected by the sensor subsystem to determine the second cell ID.

The cell tracking method may further include generating a substitute ID of the semifinished cell based on a designated rule when acquisition of the cell ID fails, and matching the virtual ID and the substitute ID. For example, the sensor subsystem, e.g., the reading device, may generate the substitute ID by generating a virtual code which includes at least one digit that indicates that the generated ID is a substitute ID. This substitute ID can be matched with the virtual ID by the signal processing subsystem, e.g., the controller, in the same way as described for the cell ID.

The cell tracking method may further include acquiring at least one of process data and inspection data on the semifinished cell, and mapping the at least one of the process data and the inspection data to the virtual ID, optionally, while the virtual ID and the cell ID have not been matched. The process data may be generated by a sub-facility in which the semifinished product is subjected to a respective sub-process on the process line. The inspection data may be measured, e.g., by an inspection system which may, for example, be part of the sensor subsystem, along the process line. The process data and/or the inspection data, generally, may be acquired by the sensor subsystem and/or the signal processing subsystem. By mapping the acquired data to the virtual ID, the acquired data may be stored along with the virtual ID and, if necessary, mapped to the cell ID later through the virtual ID. Thereby, that data can be more efficiently processed and more efficiently and reliably matched to the respective semifinished cell. Through the cell ID of the semifinished cell, the data can also be queried.

According to another aspect of the present invention, there is also provided a cell tracking system. The cell tracking system may include one or more of the following: a sensor subsystem configured to detect a semifinished cell on a process line and to acquire a cell identification, ID, of the semifinished cell by detecting a code object formed on the semifinished cell; a signal processing subsystem configured to generate a virtual ID for the detected semifinished cell upon detection of the semifinished cell by the sensor subsystem, and match the virtual ID and the cell ID. Generally, the cell tracking system may be configured to execute the method according to any one of the embodiments described above. Therefore, all features and advantages disclosed herein in connection with the cell tracking method are also disclosed for the cell tracking system and vice versa.

According to some embodiments, the sensor subsystem may include a cell detection sensor configured to detect the semifinished cell on the process line, and a reading device configured to acquire the cell identification (ID) of the semifinished cell by detecting a code object formed on the semifinished cell.

According to some embodiments, the signal processing subsystem may include a controller configured to generate a virtual ID for the semifinished cell upon detection of the semifinished cell by the cell detection sensor, and match the virtual ID and the cell ID.

According to some embodiments, the cell tracking system, in particular, the signal processing subsystem may further include a trigger board.

According to some embodiments, the trigger board configured to generate a first trigger signal and a second trigger signal based on the detection of the semifinished cell by the cell detection sensor, and the controller may be configured to generate the virtual ID based on or upon receiving the first trigger signal, and the reading device may be configured to detect the code object formed on the semifinished cell based on or upon receiving the second trigger signal. The trigger board may be configured to transmit the first trigger signal to the controller and the second trigger signal to the reading device.

The trigger board may be configured to generate the second trigger signal after a designated time elapses from a time point at which the first trigger signal is generated.

According to some embodiments, the trigger board may be configured to generate a first trigger signal based on, i.e., upon the detection of the semifinished cell by the cell detection sensor, and the cell detection sensor may be configured to detect a target semifinished cell on the process line.

Optionally, the trigger board may be further configured to generate a second trigger signal based on or upon detection of the target semifinished cell by the cell detection sensor.

Further optionally, the trigger board may be configured to transmit the first trigger signal to the controller and to transmit the second trigger signal to the reading device.

The controller may be configured to generate the virtual ID based on, e.g., upon receiving the first trigger signal, and the reading device may be configured to detect the code object formed on the semifinished cell based on, e.g., upon receiving the second trigger signal.

The semifinished cell and the target semifinished cell may be spaced apart by a designated distance on the process line, and the second trigger signal may be generated after the first trigger signal is generated.

The cell detection sensor may be configured to detect the semifinished cell which reaches a first position on the process line, the reading device may be configured to detect the code object formed on the semifinished cell which reaches a second position on the process line, and the designated distance may be a distance between the first position and the second position. That is, the cell detection sensor may issue a cell detection signal, when the semifinished cell is positioned in a detection area, e.g., a field of view (FOV) of the cell detection sensor. The first position may correspond to the detection area of the cell detection sensor. The reading device may be positioned downstream of the cell detection sensor on the process line with respect to a process direction, i.e., a travel direction or transport direction in which the semifinished cell travels along the process line. The reading device may detect the code object when the semifinished cell reaches the second position, e.g., when the semifinished cell is present in a detection area, e.g., a field of view (FOV) of the reading device.

The first trigger signal and the second trigger signal may include an identification signal for identifying the semifinished cell among a designated number of semifinished cells on the process line.

The reading device may be configured to generate a third trigger signal including the identification signal based on acquisition of the cell ID. In other words, the reading device may be configured to generate a third trigger signal upon reading the code object.

According to some embodiments, the controller may be configured to match the virtual ID and the cell ID based on the third trigger signal. As described above, the controller may compare the identification signal in the third trigger signal and the identification signal in the first trigger signal, for example.

Additional aspects of example embodiments will be set forth in part in the description which follows and, in part, will be apparent from the description, or may be learned by practice of the disclosure.

According to the present disclosure, it is possible to improve manufacture tracking quality for a secondary battery and clarify an object range of a defective cell.

In particular, data collected in a process and a cell identifier (ID) can be easily and efficiently mapped. As the data collected in the process can be mapped to the virtual ID during the process, and as the cell ID is matched or associated with the virtual ID, the data can be efficiently and reliably mapped to the cell ID. Further, by the cell ID, the collected data can be easily queried.

Effects of the present disclosure are not limited to those described above and other effects may be made apparent to those skilled in the art from the following description of the accompanying claims.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a block diagram illustrating a cell tracking system according to an example embodiment of the present invention;
FIG. 2 is a diagram for describing an operation of a cell tracking system according to an example embodiment;
FIG. 3A is a diagram for describing an example embodiment in which a cell tracking system according to an example embodiment matches IDs of a semifinished cell on a process line;
FIG. 3B is a diagram for describing an example embodiment in which a cell tracking system according to an example embodiment matches IDs of a semifinished cell on a process line;
FIG. 4 is a flowchart illustrating an operation of a cell tracking system according to an example embodiment of the present invention;
FIG. 5 is a flowchart illustrating an operation of a cell tracking system according to an example embodiment of the present invention;
FIG. 6 is a flowchart illustrating an operation of a cell tracking system according to an example embodiment of the present invention;
FIG. 7 is a flowchart illustrating an operation of a cell tracking system according to an example embodiment of the present invention;
FIG. 8 is a flowchart illustrating an operation of a cell tracking system according to an example embodiment of the present invention; and
FIG. 9 is a flowchart illustrating an operation of a cell tracking system according to an example embodiment of the present invention.

### DETAILED DESCRIPTION OF EXEMPLARY EMBODIMENTS

In description of the example embodiments, descriptions of technical contents that are well known in the art to which the present invention belongs and are not directly related to the present specification will be omitted. This is to more clearly communicate without obscuring the subject matter of the present specification by omitting unnecessary description.

For the same reason, in the accompanying drawings, some components are exaggerated, omitted or schematically illustrated. In addition, the size of each component does not fully reflect the actual size. The same or corresponding components in each drawing are given the same reference numerals.

Advantages and features of the present invention and methods of achieving them will be apparent from the following example embodiments that will be described in more detail with reference to the accompanying drawings. It should be noted, however, that the present invention is not limited to the following example embodiments, and may be implemented in various forms. Accordingly, the example embodiments are provided only to disclose the present invention and let those skilled in the art know the category of the present invention, and the present invention is merely defined by the category of the claims. The same reference numerals or the same reference designators denote the same elements throughout the specification.

At this point, it will be understood that each block of the flowchart illustrations and combinations of flowchart illustrations may be performed by computer program instructions. These computer program instructions may be embodied in a processor of a general purpose computer, a special purpose computer, or other programmable data processing equipment such that the instructions performed by the processor of the computer or other programmable data processing equipment generate parts for performing functions described in flowchart block(s). These computer program instructions may use a computer or other programmable data processing equipment for implementing a function in a specific manner or may be stored in a computer readable memory, and thus the instructions which use the computer or are stored in the computer readable memory may produce a manufacturing article including instruction parts for performing the functions described in the flowchart block(s). Since the computer program instructions can also be embedded in the computer or other programmable data processing equipment, instructions, which a series of operations are performed on the computer or other programmable data processing equipment to generate a computer-executed process, thereby operating the computer or other programmable data processing equipment, can provide operations for performing the functions described in the flowchart block(s).

In addition, each block may represent a module, segment, or a portion of a code, which includes one or more executable instructions for executing specified logical function(s). It should also be noted that, in some alternative example embodiments, it is also possible for the functions mentioned in the blocks to occur out of the order. For example, two blocks shown in succession may, in fact, be executed substantially concurrently, or the blocks may sometimes be executed in the reverse order, depending upon the functionality involved.

At this point, a term "part" in the example embodiments performs a certain role and refers to a software component or a hardware component such as a field-programmable gate array (FPGA) or an application-specific integrated circuit (ASIC). However, the part is not limited to software or hardware. The part may be in a storage medium that may perform addressing, or operate one or more processors. Thus, for example, the part includes components such as software components, object-oriented software components, class components, and task components, processes, functions, properties, procedures, subroutines, segments of program code, drivers, firmware, microcode, circuits, data, databases, data structures, tables, arrays, and variables. Functions provided in the components and the parts may be combined in the fewer components and the fewer parts or separated in the additional components and the additional parts. In addition, the components and the parts may be realized to operate a device or one or more central processing units (CPU) in a security multimedia card.

Throughout the specification, expression "at least one of a, b, and c" may include 'a only', 'b only', 'c only', 'a and b', 'a and c', 'b and c', or 'all of a, b, and c'.

In the following description, example embodiments of the present invention will be described in detail with reference to the accompanying drawings so that those skilled in the art can easily carry out the present invention. However, the present invention may be embodied in many different forms and is not limited to the example embodiments described herein.

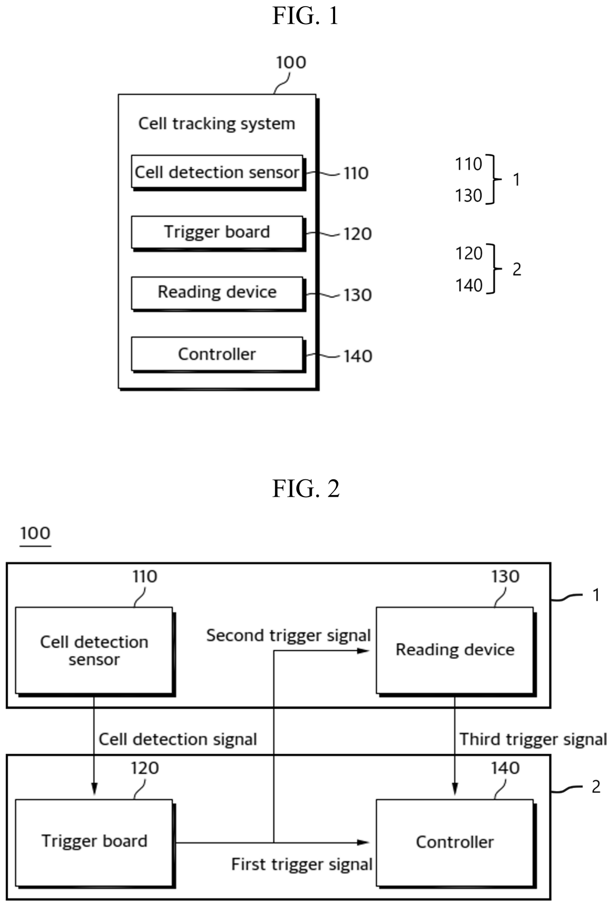

FIG. 1 is a block diagram exemplarily illustrating a cell tracking system 100.

The cell tracking system 100 may be included in a secondary battery manufacture system that performs a secondary battery manufacture process. The secondary battery manufacture process may include, for example, an electrode manufacture process, an assembling process, and an activation process for a secondary battery. In addition, the electrode manufacture process, the assembling process, and the activation process for the secondary battery each may include a plurality of sub-processes. For example, the cell tracking system 100 may be included in each of a plurality of sub-facilities for performing the plurality of sub-processes. In this case, the cell tracking system 100 may be configured to match a virtual identification (ID) and a cell ID of a semifinished cell in each sub-process. Also, the cell tracking system 100 may be configured to map, to the virtual ID, at least one of process data and inspection data collected in each sub-process. Here, mapping may be or include connecting and storing an ID and data so that the data, which is a value, is referenced through the ID, which is a key. In other words, an ID and a data mapped with the respective ID form a key-value pair. In particular, the virtual ID and at least one of process data and inspection data may be mapped, and through this, the at least one of the process data and the inspection data may be referenced through the virtual ID.

The semifinished cell may include various types of semifinished products manufactured in the secondary battery manufacture process. Specifically, the semifinished cell may be a semifinished product manufactured by a sub-facility including the cell tracking system 100 in the secondary battery manufacture process.

Battery cells included in the secondary battery may be largely classified into a jelly roll-based battery cell and a stacking/folding-based battery cell depending on a scheme of configuring an electrode assembly. The jelly roll-based battery cell may include a cylindrical or oval electrode assembly which includes a positive electrode, a negative electrode, and a separator wound so that the separator is interposed between the positive and the negative electrode. The jelly roll-based battery cell may be applied mainly to a cylindrical battery or some rectangular batteries. In contrast, the stacking/folding-based battery cell may include an electrode assembly formed in a scheme of stacking or folding an electrode and a separator after cutting the electrode and the separator in a predetermined unit. The stacking/folding-based battery cell may be applied mainly to a pouch-type battery or some rectangular batteries.

Depending on such a scheme of configuring the electrode assembly, a manufacture process for the secondary battery may be also variously configured. For example, in a case of a jelly roll-based battery, processes may be performed in the order of electrode roll supply, winding, can insertion, and welding. In contrast, in a case of a stacking/folding-based battery, processes may be performed in the order of electrode sheet cutting, stacking (or folding), and packaging. Accordingly, a shape and a tracking unit of the semifinished cell defined in each process operation may vary depending on the scheme of configuring the electrode assembly.

In a manufacturing process for the jelly roll-based battery, the semifinished cell may be a jelly roll having a structure in which the positive electrode, the negative electrode, and the separator are wound in a state of being interposed or a battery cell (e.g., a cylindrical battery cell or a rectangular battery cell) in a form in which the jelly roll is inserted into a cell case (e.g., a cylindrical case or a rectangular case). As an example, when the cell tracking system 100 is included in a sub-facility that performs a winding process included in an assembling process for the jelly roll-based battery, the semifinished cell may be the jelly roll which is formed by the winding process. As another example, when the cell tracking system 100 is included in a sub-facility that performs a can shaping process included in the assembling process for the jelly roll-based battery, the semifinished cell may be the cylindrical battery cell or the rectangular battery cell which is an object of the can shaping process.

In a manufacturing process for the stacking/folding-based battery, the semifinished cell may be a unit cell, a stack-type electrode assembly formed by stacking a plurality of unit cells, a folding-type electrode assembly formed by folding the plurality of unit cells, or a battery cell (e.g., a rectangular battery cell or a pouch-type battery cell) in a form in which an electrode assembly is inserted into a cell case (e.g., a metallic case or pouch). A unit cell may be a structure including an electrode having at least one polarity and a separator and may vary depending on a scheme of a process of forming the electrode assembly (e.g., a stacking process or a folding process).

As an example, a scheme of stacking or folding the unit cell to which the electrode and the separator are assembled is used in a general stacking process or folding process, and in this case, the unit cell may have a form of a mono cell of which a positive electrode and a negative electrode are individually positioned at both outermost sides, a bi-cell in which electrodes having an identical polarity are positioned at both outermost sides, or a half cell in which a positive electrode or a negative electrode is positioned between separators of both outermost sides. As another example, a scheme of individually loading and alternately disposing and stacking the electrode and the separator is used in a zigzag stacking (namely, z-stacking) process, and in this case, the unit cell may be defined in an electrode unit or a separator unit in a pre-assembling operation. Specifically, the zigzag stacking process may be a process of stacking a positive electrode, a negative electrode, and the separator while the positive electrode, the negative electrode, and the separator are alternately disposed. Being alternately disposed may be, for example, disposition in order of "positive electrode - separator - negative electrode - separator".

When the cell tracking system 100 is included, for example, in a sub-facility that performs a lamination process included in an assembling process for the stacking/folding-based battery, the semifinished cell may be the unit cell which is formed by assembling the electrode and the through the lamination process. When the cell tracking system 100 is included, for example, in a sub-facility that performs a stacking process (e.g., the general stacking process or the zigzag stacking process) or a folding process included in the assembling process for the stacking/folding-based battery, the semifinished cell may be the electrode assembly which is formed by the stacking process or the folding process. When the cell tracking system 100 is included, for example, in a sub-facility that performs a packaging process included in the assembling process for the stacking/folding-based battery, the semifinished cell may be a battery cell (e.g., the rectangular battery cell or the pouch-type battery cell) formed by the packaging process.

Referring to FIG. 1, the cell tracking system 100 may include a sensor subsystem 1 and a signal processing subsystem 2. The sensor subsystem 1 may include a cell detection sensor 110 and a reading device 130. The signal processing subsystem 2 may include a trigger board 120 and a controller 140. The sensor subsystem 1, optionally, may further include an inspection device (not shown) for inspecting a semifinished product on a production line to generate inspection data on the semifinished product.

The cell detection sensor 110 may detect the semifinished cell on a process line. For example, the sensor subsystem 1, in particular, the cell detection sensor 110 may detect the semifinished cell at or when it reaches a designated position on the process line. Optionally, the cell detection sensor 110 may be or include an optical sensor configured to detect presence of the semifinished cell at a specific location. For example, the cell detection sensor 110 may include a reflection type optical sensor, a transmission type optical sensor, or a diffuse reflection optical sensor. Alternatively, the cell detection sensor 110 may be or include a non-optical sensor, such as a proximity sensor (e.g., inductive or capacitive type), an ultrasonic sensor, or an image-based vision sensor configured to detect the presence and/or position of the semifinished cell.

Generally, the sensor subsystem 1, in particular, the cell detection sensor 110, may be configured to generate a cell detection signal when it detects the semifinished cell. The cell detection signal may be transmitted to the signal processing subsystem 2.

The trigger board 120 may generate a trigger signal based on, i.e., upon or in response to detection of the semifinished cell by the cell detection sensor 110. For example, the trigger board 120 may generate the trigger signal in response to or upon receiving of the cell detection signal.

For example, the trigger signal may include an identification signal for identifying the semifinished cell which is detected by the cell detection sensor 110 among a designated number (e.g., eight) of semifinished cells on the process line. Optionally, the identification signal may be a binary coded decimal (BCD) signal. For example, each time the designated number of semifinished cells which are adjacently disposed on the process line are individually detected, the trigger board 120 may generate the trigger signal which includes different identification signals individually corresponding to the semifinished cells.

The trigger signal may include, for example, a pulse signal. The pulse signal may be a signal for inducing the reading device 130 to acquire the cell ID of the semifinished cell and/or inducing the controller 140 to generate the virtual ID of the semifinished cell. That is, in response to receiving trigger signal including the pulse signal, the reading device 130 may acquire the cell ID and/or the controller 140 may generate the virtual ID.

The reading device 130 may acquire the cell ID of the semifinished cell by detecting a code object formed on the semifinished cell on the process line. Here, the code object may be an identification mark including information on an ID of a target detected and acquired by the reading device 130. The code object, for example, may be implemented as at least one of character string-based code including a number and/or a character, one-dimensional code (e.g., bar code), and two-dimensional code (e.g., a data matrix or a quick response (QR) code). Alternatively, the code object may also be realized as an RFID-tag or a similar object electronically readable, e.g., through AIDC (Automatic Identification and Data Capture) technology. Generally, the code object may be an optically or electronically readable object that represents the ID in an optically or electronically readable form. The code object may be formed as a real object to various semifinished products that will be described below and an element including such semifinished products. For example, the code object may be formed on a surface of the target by a marking device that will be described below based on at least one of laser etching, inkjet printing, or a label attaching scheme. Here, the laser etching and the inkjet printing each may be a scheme of engraving identification information in a thermal scheme or a non-contact scheme.

Such a code object and an ID identified from the code object (e.g., the cell ID) may be used to evaluate quality of each product and track a manufacturing history after a product is completed by the secondary battery manufacturing process. For example, at least a portion of various code objects to be described below may be formed to be exposed to an outside on the semifinished product so as to be detectable by a reading device after the product is completed. Through this, identification, quality evaluation, and tracking a manufacturing history by using a corresponding code object is allowed even in a final product state. Also, each ID may be managed by the controller 140 in real time and may be used to store and analyze a process condition, an inspection result, an abnormality history, or the like by product, the product being identified by the respective ID.

In addition, although content associated with the code object and ID identification is mainly described herein for the assembling process for the battery cell, the code object may be also formed to an element of a battery module or a battery pack including the battery cell, and through this, ID identification, quality management, and tracking a manufacturing history in a module or pack unit are also allowed.

The reading device 130 may be implemented in various forms depending on a type of the code object formed on the semifinished cell. For example, the reading device 130 may be a QR code reader, a bar code reader, an RFID-reader, or the like.

The controller 140 may be implemented, for example, as a programmable logic controller (PLC). The PLC may be a microprocessor-based controller in a unique form that stores an instruction by using a programmable memory and controls a machine and a process by implementing a function such as logic, sequencing, timing, counting, and calculation.

Generally, the controller 140 may include a power supply, a central processing unit (CPU), an input interface, an output interface, a communication circuit, and memory devices. The power supply may be configured to supply power to other elements of the controller, such as the CPU, the input interface, the output interface, the communication circuit, and the memory devices, for an operation of the controller 140. The memory devices may include a read-only memory (ROM) configured to store a system program such as an operating system, and a random access memory (RAM) configured to store a user program and data such as status information on an input and output device, a timer, a counter, and values of another internal device. The CPU may be configured to control communication between modules that implement the logic and convert an input signal to an output operation signal. The CPU may operate based on the system program and the user program which are stored in the memory devices. The CPU may be configured to write and/or read the process data and the inspection data in or from data areas of the memory devices based on the system program and the user program. Conditions for or data on an industrial device and a production process may be transmitted to the CPU through an input module. A result processed by the CPU may be transmitted to an actuator through an output module. The communication circuit may be configured to establish a wired communication channel and/or a wireless communication channel between the controller 140 and sub-facilities 110a and 110b or an external device and transmit and receive data to and from the sub-facilities 110a and 110b or the external device through the established channel.

However, the controller 140 is not limited thereto and may include one of a simple controller, a microprocessor, a complicated processor such as the CPU or a graphics processing unit (GPU), a processor formed by software, exclusive hardware, and firmware. Hence, the controller 140, generally, may comprise a processor. The controller 140, for example, may be implemented by a general-purpose computer or application-specific hardware such as a digital signal process (DSP), a field programmable gate array (FPGA), and an application specific integrated circuit (ASIC).

The trigger board 120 may be realized as analogue circuitry or as a digital processing unit, e.g., as a processor such as a CPU, GPU, a DSP, a FPGA, an ASIC or the like.

According to an example, the controller 140 may generate the virtual ID of the semifinished cell based on the detection of the semifinished cell by the cell detection sensor 110. That is, the controller 140, or generally, the signal processing subsystem 2 may generate the virtual ID of the semifinished cell in response to receiving a signal indicating detection of a semifinished cell. For example, the trigger board 120 may issue a trigger signal in response to receiving the cell detection signal, and the controller 140 may generate the virtual ID in response to receiving the trigger signal. The controller 140 may match the generated virtual ID of the semifinished cell and the cell ID of the semifinished cell, which is acquired by the reading device 130. Here, the virtual ID may be any virtual identifier generated by the signal processing subsystem 2, e.g., by the controller 140, based on a predetermined signal (e.g., a cell detection signal and/or a trigger signal). For example, regardless of the code object formed on the semifinished cell, the controller 140 may generate the virtual ID of the semifinished cell according to a preset ID generation rule when the predetermined signal which corresponds to or indicates detection of the semifinished cell is received. A method carried out by the signal processing subsystem 2, in particular by means of the controller 140, for generating the virtual ID may be described in detail below. The cell ID may be an actual identifier acquired as the reading device 130 reads the code object formed on the semifinished cell. The virtual ID may be mapped to the process data (and/or the inspection data), which is collected for the semifinished cell, before the cell ID is acquired by the reading device 130. Then, as being matched to the cell ID, the virtual ID may be used for linking, to the cell ID, the process data (and/or the inspection data) mapped earlier.

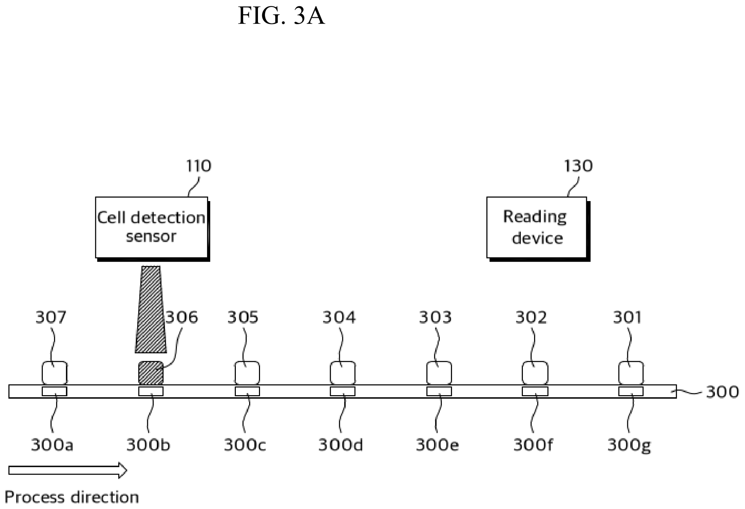

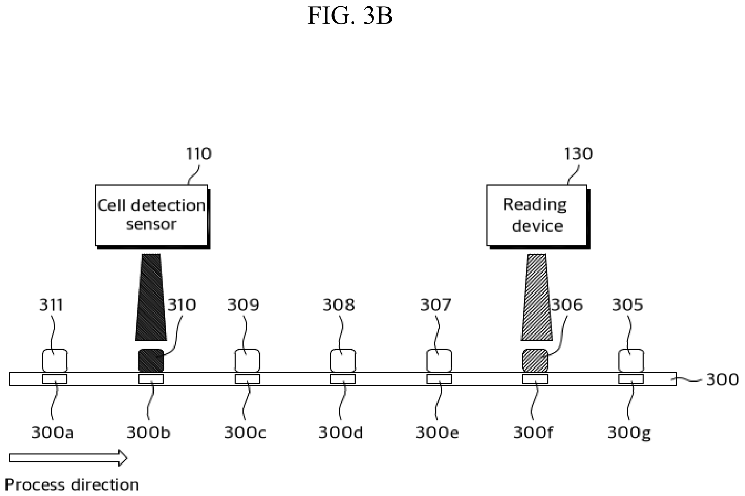

Hereinafter, example embodiments in which the cell tracking system 100 matches the virtual ID and the cell ID of the semifinished cell on the process line will be described with reference to FIGS. 2, 3A, and 3B.

FIG. 2 is a diagram for exemplarily describing an operation of the cell tracking system 100.

FIG. 3A is a diagram for describing an example in which the cell tracking system 100 matches IDs of a semifinished cell on a process line. FIG. 3B is a diagram for describing an example in which the cell tracking system 100 matches the IDs of the semifinished cell on the process line. Specifically, FIG. 3A is a diagram illustrating a case in which a semifinished cell 306 that is an object of ID matching reaches a position 300b at which the cell detection sensor 110 detects a semifinished cell. FIG. 3B is a diagram illustrating a case in which the semifinished cell 306 reaches a position 300f at which the reading device 130 detects a code object formed on the semifinished cell.

Referring to FIGS. 2 and 3A, sensor subsystem 1, e.g., by means of the cell detection sensor 110, may detect the semifinished cell 306 which reaches a first position 300b among semifinished cells 301, 302, 303, 304, 305, 306, and 307 which respectively reach a plurality of positions 300a, 300b, 300c, 300d, 300e, 300f, and 300g on a process line 300.

The sensor subsystem 1, in particular the cell detection sensor 110, may generate a cell detection signal each time a respective semifinished cell reaches the first position 300b. For example, the cell detection sensor 110 may generate a first cell detection signal when detecting the semifinished cell 306. The cell detection sensor 110 may transmit the first cell detection signal to the trigger board 120. Generally, the sensor subsystem 1 may transmit the first cell detection signal to the signal processing subsystem 2.

The trigger board 120 may generate a first trigger signal upon the detection of the semifinished cell 306 by the cell detection sensor 110. For example, the trigger board 120 may generate a first trigger signal upon or in response to receiving the first cell detection signal from the cell detection sensor 110. For example, the trigger board 120 may generate a first trigger signal each time when receiving a first cell detection signal or each time when a predefined number of first trigger signals have been received.

For example, the first trigger signal may include an identification signal for identifying the semifinished cell 306 among a designated number of semifinished cells 301, 302, 303, 304, 305, 306, and 307 adjacently positioned on the process line. In addition, the first trigger signal may further include a pulse signal for inducing the controller 140 to generate a virtual ID of the semifinished cell 306. Details on the pulse signal and the identification signal are already exemplarily disclosed above.

For example, the trigger board 120 may transmit the first trigger signal to the controller 140. The controller 140 may generate the virtual ID of the semifinished cell 306 based on the first trigger signal. For example, the controller may generate the virtual ID upon receiving the first trigger signal. Further optionally, the virtual ID may be generated according to a predefined rule taking into account information coded by the identification signal which is included in the first trigger signal. Optionally, the controller 140 may match the generated virtual ID of the semifinished cell 306 and the identification signal included in the first trigger signal.

The trigger board 120 may generate a second trigger signal upon the detection the semifinished cell 306 by the cell detection sensor 110. For example, the trigger board 120 may generate the second trigger signal after a designated time has elapsed from a time point at which the first trigger signal is generated. The designated time may be a time required for the semifinished cell 306 at the first position 300b to reach a second position 300f at which the reading device 130 detects the code object formed on the semifinished cell. For example, the designated time may be set based on a driving speed of the process line 300. For example, the designated time may be set to a time calculated by dividing a distance between the first position 300b and the second position 300f by the driving speed of the process line 300.

Optionally, the second trigger signal may include the identification signal for identifying the semifinished cell 306 among the designated number of semifinished cells 301, 302, 303, 304, 305, 306, and 307 adjacently positioned on the process line. Also, the second trigger signal may further include a pulse signal for inducing the reading device 130 to detect a code object formed on a semifinished cell 301, 302, 303, 304, 305, 306, or 307.

According to another example, the trigger board 120 may generate the second trigger signal based on detection of a designated number of semifinished cells after the semifinished cell 306 by the cell detection sensor 110. A corresponding example embodiment will be described below with reference to FIGS. 2 and 3B.

Referring to FIGS. 2 and 3B, the cell detection sensor 110 or, generally, the sensor subsystem 1 may detect a target semifinished cell 310 which reaches the first position 300b on the process line 300. The cell detection sensor 110 may generate a second cell detection signal upon detection of the target semifinished cell 310. The cell detection sensor 110 may transmit the second cell detection signal to the trigger board 120.

The trigger board 120 may generate the second trigger signal upon the detection of the target semifinished cell 310 by the cell detection sensor 110. For example, the trigger board 120 may generate the second trigger signal upon receiving the second cell detection signal which is acquired from the cell detection sensor 110.

Here, a distance between the semifinished cell 306 and the target semifinished cell 310 may be equal to the distance between the first position 300b and the second position 300f. In other words, both time points at which the trigger board 120 generates the second trigger signal in the two above-described example embodiments are equal as a time point at which the semifinished cell 306 reaches the second position 300f, but may be different in that the respective trigger for generating the second trigger signal is the number of times of cell detection or a time.

As exemplarily indicated in FIG. 2, the trigger board 120 may transmit the second trigger signal to the reading device 130. The reading device 130 may acquire a cell ID of the semifinished cell 306 based on, e.g., in response to receiving the second trigger signal by detecting the code object formed on the semifinished cell 306 which reaches the second position 300f.

Thus, generally, the signal processing subsystem 2 may be configured to generate a trigger signal that causes the sensor subsystem 1 to detect the code object on the semifinished cell. This trigger signal, for example, may be generated at a point of time later than generating the virtual ID. Further optionally, the trigger signal may cause the sensor subsystem 1 to detect the code object at a position downstream on the production line from a position where the semifinished cell was detected.

Optionally, when failing to acquire the cell ID of the semifinished cell 306, the reading device 130 or, generally, the sensor subsystem 1 may generate a substitute ID of the semifinished cell 306 based on a predefined rule. For example, the predefined rule may be a rule for showing a designated character (e.g., a lowercase letter "o") at a designated place (e.g., a fifth place) in a sequence of digits forming the cell ID. The reading device 130 may substitute the cell ID of the semifinished cell 306 with the generated substitute ID.

Further optionally, the reading device 130 or, generally, the sensor subsystem 1 may generate a third trigger signal based on acquisition of the cell ID of the semifinished cell 306. Here, the third trigger signal may include the identification signal which is included in the first trigger and the second trigger signal in common. For example, reading device 130 may receive the identification signal as part of the second trigger signal and include the received identification signal into the third trigger signal. In addition, the third trigger signal may further include the cell ID of the semifinished cell 306, which is acquired by the sensor subsystem 1, e.g., by the reading device 130. The sensor subsystem 1 may transmit the third trigger signal to the signal processing subsystem 2. For example, the reading device 130 may transmit the third trigger signal to the controller 140.

The controller 140 may match the virtual ID and the cell ID of the semifinished cell 306 based on the third trigger signal. For example, the controller 140 may match the virtual ID and the cell ID by comparing an identification signal matched to the virtual ID, e.g., the identification signal included in the first trigger signal, and the identification signal included in the third trigger signal. In other words, the controller 140 may compare the identification signal matched to the virtual ID and the identification included in the third trigger signal and match the virtual ID and the cell ID when the identification signals are identical.

When the semifinished cell 306 is an electrode assembly formed by a plurality of unit cells being stacked and folded, the controller 140 may acquire a plurality of unit cell IDs individually corresponding to the plurality of unit cells which are included in the semifinished cell 306, e.g., by reading a code object on each unit cell ID before the unit cells enter a stacking device. The controller 140 may match the acquired plurality of unit cell IDs to the virtual ID of the semifinished cell 306 which is generated later. Accordingly, the plurality of unit cell IDs may be matched to the cell ID of the semifinished cell 406, which is matched to the virtual ID.

The controller 140 may acquire at least one of process data and inspection data on the semifinished cell 306. The process data may be data related to a process performed, for the semifinished cell 306 as an object, by a sub-facility including the cell tracking system 100. For example, the process data may include at least one of a time at which the process is performed and information related to the sub-facility which performs the process for the semifinished cell 306 as the object. The process data may be generated by the respective sub-facility and transmitted to the controller. The inspection data may be data related to an inspection performed for the semifinished cell 306 in the process. For example, the inspection data may be obtained by inspecting the semifinished cell 306, e.g., by means of an inspection device, during the process. The inspection device may be part of the sensor subsystem 1. Optionally, the inspection data may include at least one of measurement information in which a size of the semifinished cell 306 is measured in a scanning scheme, a vision image acquired by photographing an exterior of the semifinished cell 306 through a vision machine, and status information on the semifinished cell 306 which is inspected based on at least one of the measurement information and the vision image.

The controller 140 may map the at least one of the acquired process data and inspection data on the semifinished cell 306 to the virtual ID of the semifinished cell 306. Accordingly, the at least one of the process data and the inspection data on the semifinished cell 306 may be mapped to the cell ID of the semifinished cell 306, which is matched to the virtual ID.

Hereinafter, an overall cell tracking operation performed by the cell tracking system 100 in an assembling process included in a secondary manufacture process will be described. Specifically, a cell tracking operation performed by the cell tracing system 100 in performance of each of a plurality of sub-processes (e.g., a notching process, a lamination process, a stacking process (or a folding process), and a packaging process) included in an assembling process for a stacking/folding-based battery will be described. Here, the cell tracking system 100 may be included in each of a plurality of sub-facilities for performing the plurality of sub-processes. However, the cell tracking system 100 is not limited thereto and may be a separate element that is operationally connected to the plurality of sub-facilities and performs the cell tracking operation by using a variety of data received from the plurality of sub-facilities.

### First example embodiment - Cell tracking operation in notching process

According to an example embodiment, the cell tracking system 100 may generate a virtual ID of the semifinished cell in the nothing process of forming an electrode tab onto an electrode sheet. Here, the semifinished cell may be a unit electrode. The unit electrode may be defined as a unit of an electrode formed with one electrode and one electrode tab. For example, the cell tracking system 100, e.g., the controller 140, may generate the virtual ID of the semifinished cell upon detection of the semifinished cell by the cell detection sensor 110.

For example, the cell tracking system 100, e.g., the controller 140, may map at least one of process data and inspection data on the semifinished cell, which is acquired in the notching process, to the virtual ID of the semifinished cell. Each time the cell tracking system 100 acquires at least one of the process data and the inspection data from each of a plurality of process devices included in a notching process facility, the cell tracking system 100 may map the at least one of the process data and the inspection data to the virtual ID of the semifinished cell. For example, when acquiring at least one of first process data and first inspection data on the semifinished cell from a first process device, the cell tracking system 100 may map the at least one of the acquired first process data and the acquired first inspection data to the virtual ID of the semifinished cell, and when acquiring at least one of second process data and second inspection data on the semifinished cell from a second process device, the cell tracking system 100 may map the at least one of the acquired second process data and the acquired second inspection data to the virtual ID of the semifinished cell.

Optionally, the cell tracking system 100 may mark the code object to the electrode tab by using a marking device (not illustrated) in the notching process. Here, the electrode tab to which the code object is formed may be a positive electrode tab or a negative electrode tab. For example, the electrode tab to which the code object is formed may be the negative electrode tab so that damage to the tab is minimized at a time of marking. In addition, the marking device (not illustrated) may be disposed at a position before the reading device 130 on a notching process line.

Further, the cell tracking system 100, e.g., the controller 140, may match a cell ID of the semifinished cell, which is acquired by the reading device 130 in the notching process, to the virtual ID of the semifinished cell. Here, the cell ID of the semifinished cell may be an actual ID acquired as the reading device 130 detects the code object formed to the electrode tab of the semifinished cell. Accordingly, the at least one of the process data and the inspection data which is mapped to the virtual ID of the semifinished cell may be mapped also to the cell ID of the semifinished cell, and through this, tracking the at least one of the process data and the inspection data which is acquired in the notching process for the semifinished cell may be provided based on the cell ID of the semifinished cell.

### Second example embodiment - Cell tracking operation in lamination process

According to an example embodiment, the cell tracking system 100, e.g., the controller 140, may generate the virtual ID of the semifinished cell in the lamination process in which a unit cell is formed by bonding the electrode sheet, to which the electrode tab is formed by the notching process, and a separator, and cutting the separator and the electrode sheet into a respective unit electrode. For example, the semifinished cell may be the unit cell which has a shape of a mono cell, a bi-cell, or a half cell. For example, the cell tracking system 100, e.g., the controller 140, may generate the virtual ID of the semifinished cell based on detection of the semifinished cell by the cell detection sensor 110.

For example, the cell tracking system 100, e.g., the controller 140, may map at least one of the process data and the inspection data on the semifinished cell, which is acquired in the lamination process, to the virtual ID of the semifinished cell. Each time the cell tracking system 100 acquires at least one of the process data and the inspection data from each of a plurality of process devices included in a lamination process facility, the cell tracking system 100, e.g., the controller 140, may map the at least one of the process data and the inspection data to the virtual ID of the semifinished cell. For example, when acquiring at least one of first process data and first inspection data on the semifinished cell from a first process device, the cell tracking system 100, e.g., the controller 140, may map the at least one of the acquired first process data and the acquired first inspection data to the virtual ID of the semifinished cell, and when acquiring at least one of second process data and second inspection data on the semifinished cell from a second process device, the cell tracking system 100, e.g., the controller 140, may map the at least one of the acquired second process data and the acquired second inspection data to the virtual ID of the semifinished cell.

The cell tracking system 100, e.g., the controller 140, may match the cell ID of the semifinished cell, which is acquired by the reading device 130 in the lamination process, to the virtual ID of the semifinished cell. Here, the cell ID of the semifinished cell may be an actual ID acquired as the reading device 130 detects the code object formed to the electrode tab of the semifinished cell. Also, the code object may be formed to the electrode tab by the marking device (not illustrated) in the notching process as described above. Accordingly, the at least one of the process data and the inspection data which are mapped to the virtual ID of the semifinished cell may be mapped also to the cell ID of the semifinished cell, and through this, tracking the at least one of the process data and the inspection data which is acquired in the lamination process for the semifinished cell may be provided based on the cell ID of the semifinished cell.

### Third example embodiment - Cell tracking operation in stacking process

According to an example embodiment, the cell tracking system 100, e.g., the controller 140, may generate virtual IDs for the plurality of unit cells in the stacking process of stacking the plurality of unit cells and forming a stack-type electrode assembly. For example, although virtual IDs may have been generated for each unit cell before, e.g., in the lamination process, a new virtual ID for each unit cell may generated. Generally, irrespective of the specific sub-process of the battery manufacturing process, a new virtual ID for each unit cell is generated in each process, e.g., for mapping the process data. Here, the unit cell may vary depending on a scheme of the stacking process. As an example, in a general stacking process, a scheme of stacking the unit cell to which the electrode and the separator are assembled is used, and in this case, the unit cell may have the shape of the mono cell, the bi-cell, or the half cell. As another example, a scheme of individually loading and alternately disposing and stacking the electrode and the separator is used in a zigzag stacking process, and in this case, the unit cell may be defined in an electrode unit or a separator unit in a pre-assembling operation.

The cell tracking system 100, e.g., the controller 140, may generate a plurality of virtual IDs individually corresponding to the plurality of unit cells on a one-to-one basis upon detection of each of the plurality of unit cells by the cell detection sensor 110 which is disposed to an input part of a stacking process line. That is, for each unit cell input into the stacking process line, one respective virtual ID may be generated.

According to an example, the cell tracking system 100 may map at least one of process data and inspection data on the plurality of unit cells, which is acquired in the stacking process before the plurality of unit cells is stacked in the stacking process, to the plurality of virtual IDs of the plurality of unit cells. Each time the cell tracking system 100 acquires the at least one of the process data and the inspection data from at least one process device that performs a process for each unit cell as an object among a plurality of process devices included in a stacking process facility, the cell tracking system 100, e.g., the controller 140, may sequentially map the at least one of the process data and the inspection data to the virtual ID of each unit cell. For example, when acquiring at least one of first process data and first inspection data on the unit cell from a first process device, the cell tracking system 100, e.g., the controller 140, may map the at least one of the acquired first process data and the acquired first inspection data to a virtual ID of the unit cell, and when acquiring at least one of second process data and second inspection data on the unit cell from a second process device, the cell tracking system 100, e.g., the controller 140, may map the at least one of the acquired second process data and the acquired second inspection data to the virtual ID of the unit cell.

Optionally, the cell tracking system 100, e.g., the controller 140, may match a plurality of unit cell IDs of the plurality of unit cells, which are acquired by the reading device 130 disposed before a stacking device that stacks the plurality of unit cells on the stacking process line, to the plurality of virtual IDs of the plurality of unit cells on a one-to-one basis. Here, the plurality of unit cell IDs of the plurality of unit cells may be actual IDs acquired as the reading device 130 detects a code object formed to an electrode tab of each unit cell. Accordingly, the at least one of the process data and the inspection data which is mapped to the virtual ID of each unit cell may be mapped also to a unit cell ID of each unit cell, and through this, tracking the at least one of the process data and the inspection data which is acquired in the stacking process for each unit cell may be provided based on the unit cell ID of each unit cell.

Further, the cell tracking system 100, e.g., the controller 140, may generate, in the stacking process, the virtual ID for the semifinished cell which includes the plurality of unit cells. Generally, the semifinished cell which includes the plurality of unit cells may be referred to as an electrode assembly. For example, the semifinished cell may be the stack-type electrode assembly formed as the plurality of unit cells is stacked by the stacking device which is included in the stacking process facility. For example, the cell tracking system 100, e.g., the controller 140, may generate the virtual ID of the semifinished cell upon detection of the unit cell, which reaches a detection position of the cell detection sensor 110 earliest among the plurality of unit cells, by the cell detection sensor 110 disposed before the stacking device on the stacking process line.

Further optionally, the cell tracking system 100 may match the virtual ID of the semifinished cell, i.e., of the electrode assembly, to the plurality of unit cell IDs of the plurality of unit cells which is included in a bundle cell, i.e., the electrode assembly. Accordingly, the tracking of the at least one of the process data and the inspection data on the plurality of unit cells matched to the plurality of cell IDs may be provided based on the virtual ID of the semifinished cell.

According to an example, the cell tracking system 100 may mark the code object onto the electrode tab by using the marking device (not illustrated) in the stacking process. According to a further example, the marking device (not illustrated) may mark the code object onto tape for bonding the unit cells included in the semifinished cell. Hereinafter, the tape for bonding may be an element for forming the stack-type electrode assembly by taping the stacked plurality of unit cells. Generally, the code object may be marked to the electrode assembly in the stacking process.

The cell tracking system 100 may match the cell ID of the semifinished cell, i.e., the electrode assembly, which is acquired by the reading device 130 disposed after the marking device (not illustrated), i.e., downstream of the marking device in the process direction on the stacking process line, to the virtual ID of the semifinished cell. As an example, the cell ID of the semifinished cell may be an actual ID acquired as the reading device 130 detects the code object formed on the tape for bonding of the semifinished cell. As another example, the cell ID of the semifinished cell may be an actual ID acquired as the reading device 130 detects the code object which is formed on an electrode tab of an outermost unit cell among the plurality of unit cells included in the semifinished cell. Accordingly, the tracking of the at least one of the process data and the inspection data on the plurality of unit cells which is acquired in the stacking process may be provided based on the cell ID of the semifinished cell.

For example, the reading device 130 disposed after the marking device (not illustrated) may acquire the cell ID of the semifinished cell upon receiving a trigger signal generated by the trigger board 120 or, generally, by the signal processing system 2. Optionally, the trigger board 120 may generate the trigger signal based on, e.g., upon or in response to, generation of the virtual ID which corresponds to the semifinished cell and may transmit the generated trigger signal to the reading device 130. Afterward, the controller 140 may match the cell ID of the semifinished cell to the virtual ID of the semifinished cell based on the received trigger signal.

The cell tracking system 100, e.g., the controller 140, may map at least one of the process data and the inspection data on the semifinished cell, which is acquired in the stacking process, to the virtual ID of the semifinished cell. That is, the cell tracking system 100 may map the at least one of the process data and the inspection data on the semifinished cell, which is acquired after the cell ID of the semifinished cell is acquired, to the cell ID which corresponds to an actual ID of the semifinished cell.

For example, the cell tracking system 100, e.g., the controller 140, may map the at least one of the process data and the inspection data on the semifinished cell, which is acquired in the stacking process, to the virtual ID of the semifinished cell each time a sequence signal corresponding to a designated position on the stacking line is generated. The sequence signal, for example, may be generated by the sensor subsystem 1, e.g., by a proximity sensor or other sensor configured to generate a signal when the semifinished cell reaches a predefined position on the process line, here the stacking line. The sequence signal may be received by the signal processing subsystem 2 and may cause the signal processing subsystem to map the at least one of the process data and the inspection data on the semifinished cell to the virtual ID of the semifinished cell. Thus, the sequence signal may serve as a trigger signal for ID-data mapping. For example, the cell tracking system 100 may acquire the at least one of the process data and the inspection data on the semifinished cell at designated intervals of time before the semifinished cell reaches the designated position and may generate the sequence signal when the semifinished cell reaches the designated position. Afterward, the cell tracking system 100, e.g., the controller 140, may map the at least one the process data and the inspection data, which is acquired before the semifinished cell reaches the designated position, to the cell ID of the semifinished cell based on the generated sequence signal.

### Fourth example embodiment - Cell tracking operation in folding process

According to an example embodiment, the cell tracking system 100 may generate virtual IDs for the plurality of unit cells in the folding process. The folding process includes folding the plurality of unit cells which are formed with the unit electrode and the separator, and forming a folding-type electrode assembly. For example, the cell tracking system 100, e.g., the controller 140, may generate the plurality of virtual IDs individually corresponding to the plurality of unit cells on a one-to-one basis upon detection of each of the plurality of unit cells by the cell detection sensor 110 which is disposed to an input part of a folding process line. That is, for each unit cell input into the folding process line and detected by the sensor subsystem 1, i.e., by the cell detection sensor 110, one respective virtual ID may be generated.

Optionally, the cell tracking system 100, e.g., the controller 140, may map at least one of the process data and the inspection data on the plurality of unit cells, which is acquired in the folding process, e.g., on the folding process line, before the plurality of unit cells is folded, to the plurality of virtual IDs of the plurality of unit cells. Each time the cell tracking system 100, e.g., the controller 140, acquires the at least one of the process data and the inspection data from at least one process device that performs a process for each unit cell as an object among a plurality of process devices included in a folding process facility or by the inspection system, the cell tracking system 100, e.g., the controller 140, may sequentially map the at least one of the process data and the inspection data to a virtual ID of each unit cell. For example, when acquiring at least one of first process data and first inspection data on the unit cell from a first process device, the cell tracking system 100 may map the at least one of the acquired first process data and the acquired first inspection data to the virtual ID of the unit cell, and when acquiring at least one of second process data and second inspection data on the unit cell from a second process device, the cell tracking system 100 may map the at least one of the acquired second process data and the acquired second inspection data to the virtual ID of the unit cell.

The cell tracking system 100, e.g., the controller 140, may match a plurality of unit cell IDs of the plurality of unit cells, which are acquired by the reading device 130 disposed before a folding device that folds the plurality of unit cells on the folding process line, to the plurality of virtual IDs of the plurality of unit cells on a one-to-one basis. Here, the plurality of cell IDs of the plurality of unit cells may be an actual ID acquired as the reading device 130 detects the code object formed to the electrode tab of each unit cell. In other words, each unit cell ID may be matched with one virtual ID. Accordingly, at least one of the process data and the inspection data which is mapped to the virtual ID of each unit cell may be mapped also to the unit cell ID of each unit cell, and through this, the tracking of the at least one of the process data and the inspection data which is acquired in the folding process for each unit cell may be provided based on the unit cell ID of each unit cell.

The cell tracking system 100, e.g., the controller 140, may generate, in the folding process, a virtual ID of the semifinished cell which includes the plurality of unit cells. Generally, the semifinished cell which includes the plurality of unit cells may be referred to as an electrode assembly. For example, the semifinished cell may be the folding-type electrode assembly formed as the plurality of unit cells is folded by the folding device included in the folding process facility. For example, the cell tracking system 100, e.g., the controller 140, may generate the virtual ID for the semifinished cell upon detection of the unit cell, which reaches the detection position of the cell detection sensor 110 earliest among the plurality of unit cells, by the cell detection sensor 110 disposed before the folding device on the folding process line.

Further optionally, the cell tracking system 100 may match the virtual ID of the semifinished cell to the plurality of cell IDs of the plurality of unit cells which is included in the bundle cell, i.e., the electrode assembly. Accordingly, the tracking of the at least one of the process data and the inspection data on the plurality of unit cells matched to the plurality of cell IDs may be provided based on the virtual ID of the semifinished cell.

The cell tracking system 100, e.g., the controller 140, may match the cell ID of the semifinished cell, which is acquired by the reading device 130 disposed after the folding device on the folding process line, to the virtual ID of the semifinished cell. Here, the cell ID of the semifinished cell may be an actual ID acquired as the reading device 130 detects the code object physically marked on the semifinished cell. For example, the code object may be formed on an electrode tab of an uppermost unit cell among the plurality of unit cells included in the semifinished cell. It may also be provided that the cell tracking system 100 marks the code object onto the electrode tab or onto another portion of the assembly, by using a marking device (not illustrated) in the folding process, before the code object is detected. Accordingly, tracking of the at least one of the process data and the inspection data on the plurality of unit cells, which is acquired in the folding process, may be provided based on the cell ID of the semifinished cell.

The reading device 130 disposed after the folding device (not illustrated) may acquire the cell ID of the semifinished cell based on the trigger signal generated by the trigger board 120 or, generally, by the signal processing subsystem 2. For example, the trigger board 120 may generate the trigger signal based on generation of the virtual ID which corresponds to the semifinished cell and may transmit the generated trigger signal to the reading device 130. Afterward, the controller 140 may match the cell ID of the semifinished cell to the virtual ID of the semifinished cell based on the received trigger signal.

Optionally, the cell tracking system 100, e.g., the controller 140, may map the at least one of the process data and the inspection data on the semifinished cell, which is acquired in the folding process, to the virtual ID of the semifinished cell. That is, the cell tracking system 100, e.g., the controller 140, may map the at least one of the process data and the inspection data on the semifinished cell, which is acquired after the cell ID of the semifinished cell is acquired, to the cell ID which corresponds to an actual ID of the semifinished cell.

For example, the cell tracking system 100, e.g., the controller 140, may map the at least one of the process data and the inspection data on the semifinished cell, which are acquired in the folding process, to the virtual ID of the semifinished cell each time a sequence signal corresponding to a designated position on the folding line is generated. The sequence signal, for example, may be generated by the sensor subsystem 1, e.g., by a proximity sensor or other sensor configured to generate a signal when the semifinished cell reaches a predefined position on the process line, here the folding line. The sequence signal may be received by the signal processing subsystem 2 and may cause the signal processing subsystem to map the at least one of the process data and the inspection data on the semifinished cell to the virtual ID of the semifinished cell. Thus, the sequence signal may serve as a trigger signal for ID-data mapping. For example, the cell tracking system 100 may acquire the at least one of the process data and the inspection data on the semifinished cell at designated intervals of time before the semifinished cell reaches the designated position and may generate the sequence signal when the semifinished cell reaches the designated position. Afterward, the cell tracking system 100 may map the at least one the process data and the inspection data, which is acquired before the semifinished cell reaches the designated position, to the cell ID of the semifinished cell based on the generated sequence signal.

### Fifth example embodiment - Cell tracking operation in packaging process

According to an example, in the packaging process of packaging the electrode assembly (e.g., the stack-type electrode assembly or the folding-type electrode assembly) in a cell case (e.g., a metallic case or pouch) and forming a battery cell (e.g., a rectangular battery cell or a pouch-type battery cell), the cell tracking system 100, e.g., the controller 140, may generate a virtual ID of the electrode assembly. For example, the cell tracking system 100 may generate the virtual ID of the electrode assembly upon detection of the electrode assembly by the cell detection sensor 110 which may be disposed at an input part of a packaging process line.

The cell tracking system 100, e.g., the controller 140, may map at least one of process data and inspection data on the electrode assembly to the virtual ID of the electrode assembly, wherein the process data and/or the inspection data is generated and acquired in the packaging process before the electrode assembly is packaged in the cell case. Each time the cell tracking system 100, e.g., the controller 140, acquires the at least one of the process data and the inspection data from at least one process device that performs a process for the electrode assembly as an object among a plurality of process devices included in a packaging process facility or from the inspection system, the cell tracking system 100 may sequentially map the at least one of the process data and the inspection data to the virtual ID of the electrode assembly. For example, when acquiring at least one of first process data and first inspection data on the electrode assembly from a first process device, the cell tracking system 100 may map the at least one of the acquired first process data and the acquired first inspection data to the virtual ID of the electrode assembly, and when acquiring at least one of second process data and second inspection data on the unit cell from a second process device, the cell tracking system 100 may map the at least one of the acquired second process data and the acquired second inspection data to the virtual ID of the electrode assembly.

The cell tracking system 100, e.g., the controller 140, may match a cell ID of the electrode assembly, which is acquired by the reading device 130 disposed before a packaging device on the folding process line, to the virtual ID of the electrode assembly. Here, when the electrode assembly is a stack-type electrode assembly, the cell ID of the electrode assembly may be an actual ID acquired as the reading device 130 detects a code object formed, for example, on a tape for bonding the unit cells included in the electrode assembly. When the electrode assembly is a folding-type electrode assembly, the cell ID of the electrode assembly may be an actual ID acquired as the reading device 130 detects a code object formed, for example, on an electrode tab of an uppermost unit cell among a plurality of unit cells included in the electrode assembly. Accordingly, the at least one of the process data and the inspection data, which is mapped to the virtual ID of the electrode assembly, may be mapped also to the cell ID of the electrode assembly, and through this, the tracking of the at least one of the process data and the inspection data, which is acquired in the packaging process for the electrode assembly, may be provided based on the cell ID of the electrode assembly.

Optionally, the cell tracking system 100 may mark a code object onto the semifinished cell by using the marking device (not illustrated) in the packaging process. Here, the semifinished cell may be a battery cell (e.g., the rectangular battery cell or the pouch-type battery cell) formed as the electrode assembly is packaged in the cell case. For example, the marking device (not illustrated) may mark the code object onto the cell case which is included in the semifinished cell. Specifically, the marking device (not illustrated) may mark the code object onto a case portion and/or a void portion that is removed at a final product stage.

Further, the cell tracking system 100, e.g., the controller 140, may match the cell ID of the semifinished cell, which is acquired by the reading device 130 disposed after the marking device (not illustrated) on the packaging process line, to the cell ID of the electrode assembly. Here, the cell ID of the semifinished cell may be an actual ID acquired as the reading device 130 detects the code object which is formed on a negative electrode lead and/or the cell case of the semifinished cell. As an example, the reading device 130 may acquire the cell ID of the semifinished cell by detecting the code object which is formed on the negative electrode lead included in the semifinished cell. As another example, the reading device 130 may acquire the cell ID of the semifinished cell by detecting the code object which is formed on the void portion or the case portion of the cell case included in the semifinished cell. Accordingly, the tracking of the at least one of the process data and the inspection data on the electrode assembly, which is acquired in the packaging process, may be provided based on the cell ID of the semifinished cell.

The cell tracking system 100, e.g., the controller 140, may map at least one of the process data and the inspection data on the semifinished cell, which is acquired in the packaging process, to the virtual ID of the semifinished cell. That is, the cell tracking system 100 may map the at least one of process data and the inspection data on the semifinished cell, which is acquired after the cell ID of the semifinished cell is acquired, to the cell ID which corresponds to the actual ID of the semifinished cell.

For example, the cell tracking system 100 may map the at least one of the process data and the inspection data on the semifinished cell, which is acquired in the packaging process, to the virtual ID of the semifinished cell each time a sequence signal corresponding to a designated position on the packaging line is generated. The sequence signal, for example, may be generated by the sensor subsystem 1, e.g., by a proximity sensor or other sensor configured to generate a sequence signal when the semifinished cell reaches a predefined position on the process line, here the packaging line. The sequence signal may be received by the signal processing subsystem 2 and may cause the signal processing subsystem to map the at least one of the process data and the inspection data on the semifinished cell to the virtual ID of the semifinished cell. Thus, the sequence signal may serve as a trigger signal for ID-data mapping. For example, the cell tracking system 100 may acquire the at least one of the process data and the inspection data on the semifinished cell at designated intervals of time before the semifinished cell reaches the designated position and may generate the sequence signal when the semifinished cell reaches the designated position. Afterward, the cell tracking system 100 may map the at least one the process data and the inspection data, which is acquired before the semifinished cell reaches the designated position, to the cell ID of the semifinished cell based on the generated sequence signal.

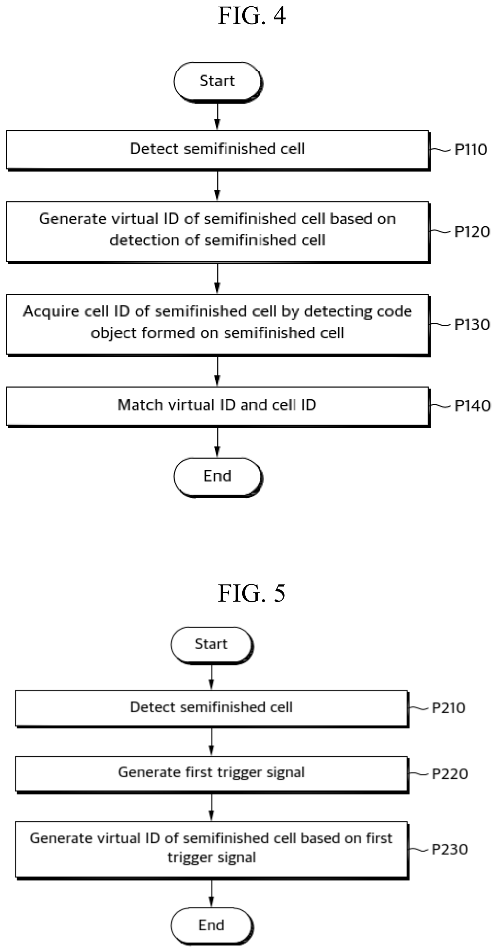

FIG. 4 is a flowchart exemplarily illustrating an operation method of a cell tracking system. Since an operation method in FIG. 4 may be performed by the cell tracking system 100, redundant descriptions similar to the above description may be omitted.

An example embodiment illustrated in FIG. 4 is merely one example embodiment, and an order of operations according to various example embodiments of the present invention may be different from that described in FIG. 4. Some operations illustrated in FIG. 4 may be omitted, an order of the operations may be changed, or the operations may be merged.

Referring to FIG. 4, in P110, the cell tracking system, e.g., the sensor subsystem 1, particularly the cell detection sensor 110 may detect a semifinished cell on a process line.

In P120, the cell tracking system, e.g., the signal processing subsystem 2, particularly the controller 140 may generate a virtual ID of the semifinished cell detected in P110 upon detection of the semifinished cell in P110.

In P130, the cell tracking system, e.g., the sensor subsystem 1, particularly the reading device 130 may acquire a cell ID of the semifinished cell detected in P110 by detecting of a code object formed on the semifinished cell detected in P110.

In P140, the cell tracking system, e.g., the signal processing subsystem 2, particularly the controller 140 may match the virtual ID generated in P120 and the cell ID acquired in P130.

FIG. 5 is a flowchart illustrating an operation of a cell tracking system. Since an operation method in FIG. 5 may be performed by the cell tracking system 100, redundant descriptions similar to the above description may be omitted.

An example embodiment illustrated in FIG. 5 is merely one example embodiment, and an order of operations according to various example embodiments of the present invention may be different from that described in FIG. 5. Some operations illustrated in FIG. 5 may be omitted, an order of the operations may be changed, or the operations may be merged. The method of FIG. 5 may form part of the method of FIG. 4, as will be explained below.

Referring to FIG. 5, in P210, the cell tracking system may detect a semifinished cell on a process line. Step P210, thus, may correspond to step P110 of FIG. 4.

In P220, the cell tracking system may generate a first trigger signal, e.g., through the signal processing subsystem 2, particularly by the trigger board 120. Here, the first trigger signal may include an identification signal for identifying the semifinished cell detected in P210 among a designated number of semifinished cells adjacently positioned on the process line. In addition, the first trigger signal may further include a pulse signal for inducing the signal processing subsystem 1, e.g. the controller 140 to generate a virtual ID of the semifinished cell detected in P210.

In P230, the cell tracking system, e.g., the controller 140, may generate the virtual ID of the semifinished cell detected in P210 upon or in response to the first trigger signal generated in P220. For example, the cell tracking system, e.g., the signal processing subsystem 2, in particular the controller 140, may match the virtual ID generated in P230 and the identification signal included in the first trigger signal generated in P220. Step P230 may correspond to step P120 of FIG. 4.

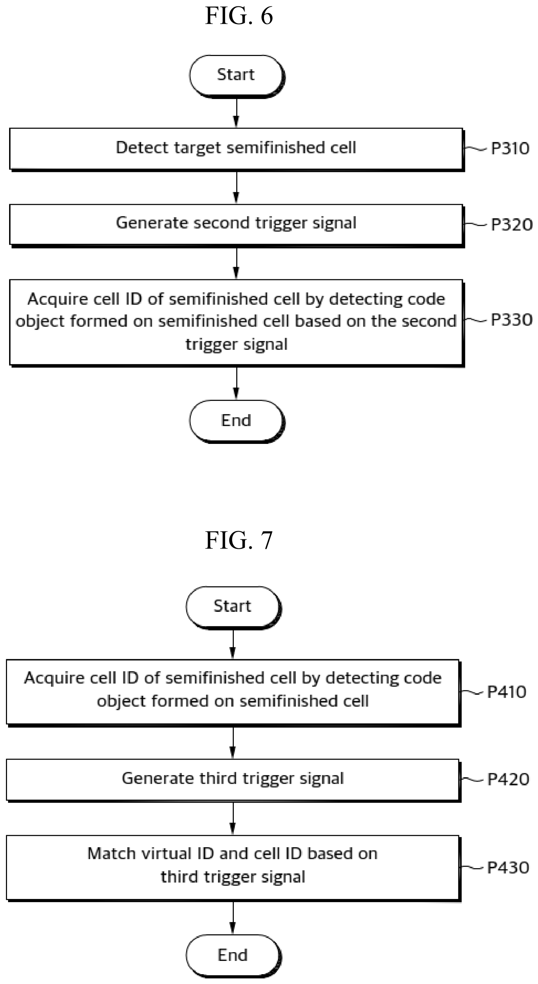

FIG. 6 is a flowchart exemplarily illustrating an operation of a cell tracking system. Since an operation method in FIG. 6 may be performed by the cell tracking system 100, redundant descriptions similar to the above description may be omitted.

An example embodiment illustrated in FIG. 6 is merely one example embodiment, and an order of operations according to various example embodiments of the present invention may be different from that described in FIG. 6. Some operations illustrated in FIG. 6 may be omitted, an order of the operations may be changed, or the operations may be merged. The method of FIG. 6 may be carried out together with the method of FIG. 4 or FIG. 5.

Referring to FIG. 6, in P310, the cell tracking system may detect a target semifinished cell on a process line, e.g., by means of the sensor subsystem 1, particularly the cell detection sensor 110. Here, the target semifinished cell may be disposed to be spaced apart from a semifinished cell detected in P110 of FIG. 4 and P210 of FIG. 5 by a designated distance on the process line. For example, the target semifinished cell may be positioned upstream on the process line relative to the semifinished cell detected in P110, P210. In addition, the designated distance may be a distance between a first position on the process line, at which the cell tracking system detects the semifinished cell and the target semifinished cell in P110 of FIG. 4, P210 of FIG. 5, and P310 of FIG. 6, and a second position on the process line, at which the cell tracking system detects a code object formed on the semifinished cell in P130 of FIG. 4 and P330 of FIG. 6.

In P320, the cell tracking system, e.g., the signal processing subsystem 2, particularly the trigger board 120, may generate a second trigger signal. Here, the second trigger signal may include an identification signal for identifying the semifinished cell detected in P110 of FIG. 4 and P210 of FIG. 5 among a designated number of semifinished cells adjacently positioned on the process line. In addition, the second trigger signal may further include a pulse signal for inducing the cell tracking system, e.g., sensor subsystem 1, particularly the reading device 130, to detect the code object formed on the semifinished cell.

In P330, the cell tracking system, e.g., the sensor subsystem 1, may acquire a cell ID of the semifinished cell by detecting the code object formed on the semifinished cell upon or in response to receiving the second trigger signal generated in P320. For example, the reading device 130 may detect the code object in response to receiving the second trigger signal.

FIG. 7 is a flowchart exemplarily illustrating an operation of a cell tracking system according. Since an operation method in FIG. 7 may be performed by the cell tracking system 100, redundant descriptions similar to the above description may be omitted.

An example embodiment illustrated in FIG. 7 is merely one example embodiment, and an order of operations according to various example embodiments of the present invention may be different from that described in FIG. 7. Some operations illustrated in FIG. 7 may be omitted, an order of the operations may be changed, or the operations may be merged.

Referring to FIG. 7, in P410, the cell tracking system, e.g., the sensor subsystem 1, may acquire a cell ID of a semifinished cell by detecting a code object formed on the semifinished cell, as in P330 of FIG. 6.

In P420, the cell tracking system, e.g., the sensor subsystem 1, particularly the reading device 130 may generate a third trigger signal. Here, the third trigger signal may include an identification signal included, in common, in a first trigger signal generated in P220 of FIG. 5 and a second trigger signal generated in P320 of FIG. 6. For example, reading device 130 may receive the identification signal as part of the second trigger signal and include the received identification signal into the third trigger signal. In addition, the third trigger signal may further include the cell ID of the semifinished cell, which is acquired in P410.

In P430, the cell tracking system, e.g., the signal processing subsystem, particularly the controller 140, may match, based on the third trigger signal generated in P420, a virtual ID generated in P120 of FIG. 4 or P230 of FIG. 5 and the cell ID acquired in P410. For example, the cell tracking system, e.g., the signal processing subsystem, particularly the controller 140, may compare an identification signal matched to the virtual ID generated in P120 of FIG. 4 or P230 of FIG. 5 and the identification signal included in the third trigger signal, and match the virtual ID and the cell ID of the semifinished cell, if the identification signals matched to the virtual id and the identification signal in the third trigger signal fulfil a predefined comparison criteria, e.g., if they are identical.

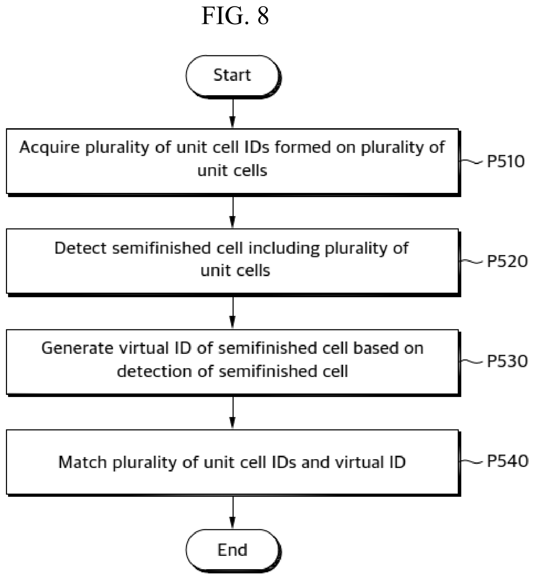

FIG. 8 is a flowchart exemplarily illustrating an operation of a cell tracking system. Since an operation method in FIG. 8 may be performed by the cell tracking system 100, redundant descriptions similar to the above description may be omitted.

An example embodiment illustrated in FIG. 8 is merely one example embodiment, and an order of operations according to various example embodiments of the present invention may be different from that described in FIG. 8. Some operations illustrated in FIG. 8 may be omitted, an order of the operations may be changed, or the operations may be merged.

Referring to FIG. 8, in P510, the cell tracking system e.g., the sensor subsystem 1, particularly a reading device thereof, may acquire a plurality of unit cell IDs formed on a plurality of unit cells, e.g., when the unit cells are input into a respective process line. Here, the plurality of unit cells may be included in a semifinished cell detected in P110 of FIG. 4 or P210 of FIG. 5. In this case, the semifinished cell may be an electrode assembly formed as the plurality of unit cells is stacked or folded.

In P520, the cell tracking system, e.g., the sensor subsystem 1, particularly the detection sensor 110, may detect the semifinished cell including the plurality of unit cells.

In P530, the cell tracking system, e.g., the signal processing subsystem 2, particularly the controller 140, may generate a virtual ID of the semifinished cell detected in P520 based on detection, in P520, of the semifinished cell.

In P540, the cell tracking system, e.g., the signal processing subsystem 2, particularly the controller 140, may match the plurality of unit cell IDs acquired in P510 and the virtual ID generated in P530.

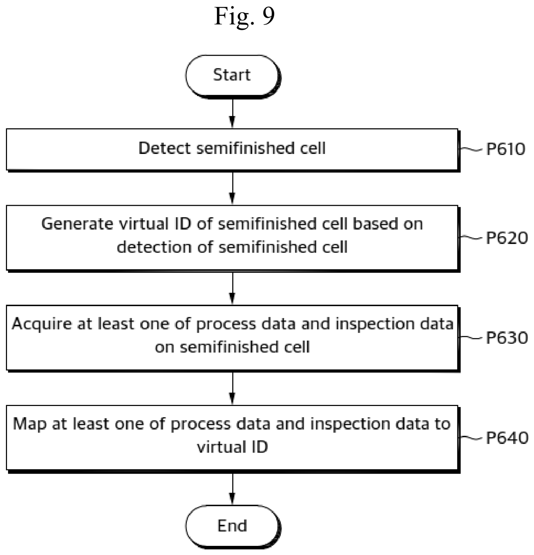

FIG. 9 is a flowchart exemplarily illustrating an operation of a cell tracking system. Since an operation method in FIG. 9 may be performed by the cell tracking system 100, redundant descriptions similar to the above description may be omitted.

An example embodiment illustrated in FIG. 9 is merely one example embodiment, and an order of operations according to various example embodiments of the present invention may be different from that described in FIG. 9. Some operations illustrated in FIG. 9 may be omitted, an order of the operations may be changed, or the operations may be merged.

Referring to FIG. 9, in P610, the cell tracking system, e.g., the sensor subsystem 1, particularly the cell detection sensor 110, may detect a semifinished cell on a process line, as described above.

In P620, the cell tracking system, e.g., the signal processing subsystem 2, particularly the controller 140, may generate a virtual ID of the semifinished cell detected in P610 based on detection of the semifinished cell in P610, as described above.

In P630, the cell tracking system may acquire at least one of process data and inspection data on the semifinished cell detected in P610. Here, the process data may be data related a process performed, for the semifinished cell as an object, by a sub-facility including the cell tracking system or being in signal communication with the cell tracking system. The inspection data may be data related with an inspection performed for the semifinished cell in the process. The sensor subsystem 1, e.g., by means of an inspection sensor, may measure or generate the inspection data and transmit the inspection data to the signal processing subsystem 2, e.g., to the controller. The respective sub-facility may generate at least a part of the process data and transmit it to the signal processing subsystem 2, e.g., to the controller 140.

In P630, the cell tracking system may match the at least one of the process data, which is acquired in P360, to the virtual ID generated in P620.

The cell tracking system according to the above-described example embodiments may include a processor, a memory that stores and executes program data, a permanent storage such as a disk drive, a communication port for communicating with an external device, and a user interface device such as a touch panel, a key, and an icon. Methods implemented by software modules or algorithms may be stored in a computer-readable recording medium as computer-readable code or program instructions executable on the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

Various example embodiments of the present invention may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or of other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include meaning of a series of routines of software in association with a processor.

The above-described embodiments are merely examples and other embodiments may be implemented within the scope of the following claims.

## Claims

1. A cell tracking method executed by a cell tracking system (100) including a sensor subsystem (1) and a signal processing subsystem (2), the method comprising:
detecting, by the sensor subsystem (1), a semifinished cell (306) on a process line (300);
generating, by the signal processing subsystem (2), a virtual identification, ID, for the detected semifinished cell (306) upon detection of the semifinished cell (306);
acquiring a cell ID of the semifinished cell (306) by detecting, by the sensor subsystem (1), a code object formed on the semifinished cell (306); and
matching, by means of the signal processing subsystem (2), the virtual ID and the cell ID.

2. The cell tracking method of claim 1, further comprising:
generating, by a trigger board (120) of the signal processing subsystem (2) a first trigger signal and a second trigger signal based on the detection of the semifinished cell (306),
wherein a controller (140) of the signal processing subsystem (2), generates the virtual ID upon receiving the first trigger signal, and
a reading device (130) of the sensor subsystem (1) detects the code object formed on the semifinished cell (306) upon receiving the second trigger signal.

3. The cell tracking method of claim 2, wherein the trigger board (120) generates the second trigger signal after a predefined time has elapsed from a time point at which the first trigger signal is generated.

4. The cell tracking method of claim 1, further comprising:
generating, by a trigger board (120) of the signal processing subsystem (2), a first trigger signal upon the detection of the semifinished cell (306);
detecting, by a cell detection sensor (110) of the sensor subsystem (1), a target semifinished cell (310) on the process line (300);
generating, by the trigger board (120), a second trigger signal upon the detection of the target semifinished cell (310); and
wherein a controller (140) of the signal processing subsystem (2) generates the virtual ID upon receiving the first trigger signal, and
a reading device (130) of the sensor subsystem (1) detects the code object formed on the semifinished cell (306) upon receiving the second trigger signal.

5. The cell tracking method of claim 4, wherein the semifinished cell (306) and the target semifinished cell (310) are spaced apart by a predefined distance on the process line, and
the second trigger signal is generated after the first trigger signal is generated.

6. The cell tracking method of claim 5, wherein the cell detection sensor (110) detects the semifinished cell (306) which reaches a first position on the process line (300),
wherein the reading device (130) detects the code object formed on the semifinished cell (306) which reaches a second position on the process line (300), and
the predefined distance corresponds to a distance between the first position and the second position.

7. The cell tracking method of any one of claims 2 to 6, wherein the first trigger signal and the second trigger signal include an identification signal for identifying the semifinished cell (306) among plural semifinished cells (301-307) on the process line (300), wherein the identification signal preferably is a binary coded decimal, BCD, signal.

8. The cell tracking method of claim 7, further comprising:
generating, upon acquisition of the cell ID by the reading device (130), a third trigger signal including the identification signal,
wherein the controller (140) matches the virtual ID and the cell ID based on the third trigger signal.

9. The cell tracking method of any one of the preceding claims, wherein detecting the semifinished cell (306) comprises detecting the semifinished cell (306) on a first process line where the semifinished cell is subjected to a first sub-process included in a secondary battery manufacture process,
generating the virtual ID comprises generating a first virtual ID for the semifinished cell (306) in the first sub-process,
acquiring the cell ID comprises acquiring the cell ID of the semifinished cell (306) by detecting the code object in the first sub-process,
matching of the virtual ID and the cell ID comprises matching the first virtual ID and the cell ID, and
the cell tracking method further comprises marking the code object on the semifinished cell (306) in the first sub-process.

10. The cell tracking method of claim 9, further comprising:
detecting, by the sensor subsystem (1), the semifinished cell (306) on a second process line where the semifinished cell (306) is subjected to a second sub-process included in the secondary battery manufacture process, the second sub-process being performed after the first sub-process;
generating, by the signal processing subsystem (2), a second virtual ID for the detected semifinished cell (306) in the second sub-process upon detection of the semifinished cell (306) in the second sub-process;
acquiring, in the second sub-process, the cell ID of the semifinished cell (306) by detecting, by means of the sensor subsystem (1), a code object formed on the semifinished cell (306); and
matching, by the signal processing subsystem (2), the second virtual ID and the cell ID.

11. The cell tracking method of any one of the preceding claims, further comprising:
acquiring a plurality of unit cell IDs by detecting, by means of the sensor subsystem (1), a respective code object formed on each of a plurality of unit cells forming the semifinished cell (306), each unit cell ID corresponding to one of the plurality of unit cells; and
matching, by means of the signal processing subsystem (2), the plurality of unit cell IDs and the virtual ID.

12. The cell tracking method of claim 11, further comprising:
detecting, by the sensor subsystem (1), the plurality of unit cells on the process line (300);
generating, by the signal processing subsystem (2), a plurality of virtual IDs upon detection of the plurality of unit cells, each virtual ID corresponding to one of the plurality of unit cells; and
matching, by the signal processing subsystem (1), each of plurality of virtual IDs with a respective one of the plurality of unit cell IDs.

13. The cell tracking method of claim 11 or 12, wherein the semifinished cell (306) is a stack-type electrode assembly formed by stacking the plurality of unit cells or a folding-type electrode assembly formed by folding the plurality of unit cells.

14. The cell tracking method of any one of the preceding claims, further comprising:
marking a second code object on a semifinished cell product including the semifinished cell (306);
acquiring a second cell ID of the semifinished cell product by detecting, by means of the sensor subsystem (1), the second code object formed on the semifinished cell product; and
matching, by the signal processing subsystem (2), the cell ID and the second cell ID.

15. The cell tracking method of any one of the preceding claims, further comprising:
generating, by the sensor subsystem (1), a substitute ID of the semifinished cell (306) when acquisition of the cell ID fails; and
matching, by the signal processing subsystem (2), the virtual ID and the substitute ID.

16. The cell tracking method of any one of the preceding claims, further comprising:
acquiring, by the sensor subsystem (2) and/or the signal processing subsystem (1), at least one of process data and inspection data on the semifinished cell (306); and
mapping the at least one of the process data and the inspection data to the virtual ID.

17. A cell tracking system (100), comprising:
a sensor subsystem (1) configured to detect a semifinished cell (306) on a process line (300) and to acquire a cell identification, ID, of the semifinished cell (306) by detecting a code object formed on the semifinished cell (306); and
a signal processing subsystem (2) configured to:
- generate a virtual ID for the detected semifinished cell (306) upon detection of the semifinished cell (306) by the sensor subsystem (1), and
- match the virtual ID and the cell ID.

18. The cell tracking system (100) of claim 17, wherein the sensor subsystem (1) includes a cell detection sensor (110) configured to detect the semifinished cell (306) on the process line (300), and a reading device (130) configured to detect the code object formed on the semifinished cell (306), and
wherein the signal processing subsystem (2) includes a controller (140) configured to generate virtual ID and to match the virtual ID and the cell ID.

19. The cell tracking system of claim 18, wherein the signal processing subsystem (2) further comprises a trigger board (120) configured to:
- generate a first trigger signal and a second trigger signal based on the detection of the semifinished cell (306) by the cell detection sensor, and
- transmit the first trigger signal to the controller (140) and the second trigger signal to the reading device (130),
wherein the controller (140) is configured to generate the virtual ID upon receiving the first trigger signal, and
the reading device (130) is configured to detect the code object formed on the semifinished cell (306) upon receiving the second trigger signal.

20. The cell tracking system of claim 18, wherein the signal processing subsystem (2) further comprises a trigger board (120),
wherein the cell detection sensor (110) is configured to detect a target semifinished cell (310) on the process line (300),
wherein the trigger board (120) is configured to generate a first trigger signal upon the detection of the semifinished cell (306) by the cell detection sensor (110) and transmit the first trigger signal to the controller (140), and to generate a second trigger signal upon detection of the target semifinished cell (310) by the cell detection sensor (110) and transmit the second trigger signal to the reading device (130),
wherein the controller (140) is configured to generate the virtual ID upon receiving the first trigger signal, and
the reading device (130) is configured to detect the code object formed on the semifinished cell (306) upon receiving the second trigger signal.
